(19) **Europäisches Patentamt**

**European Patent Office**

**Office européen des brevets**

(11) **EP 1 108 885 B1**

(12) **EUROPEAN PATENT SPECIFICATION**

(45) Date of publication and mention
of the grant of the patent:
**12.10.2005 Bulletin 2005/41**

(51) Int Cl.⁷: **F02M 61/18**, F02M 61/16

(21) Application number: **00115062.2**

(22) Date of filing: **26.07.2000**

(54) **Direct injection fuel injector and internal combustion engine mounting the same**

Brennstoffeinspritzventil für Direkteinspritzung und mit dieser Vorrichtung ausgestatteter
Verbrennungsmotor

Injecteur de carburant pour injection directe et moteur à combustion interne équipé d'un tel injecteur

(84) Designated Contracting States:
**DE FR GB IT**

(30) Priority: **15.12.1999 JP 35550199**

(43) Date of publication of application:
**20.06.2001 Bulletin 2001/25**

(73) Proprietor: **Hitachi, Ltd.**
**Tokyo 101-8010 (JP)**

(72) Inventors:
• **Miyajima, Ayumu**
**Niihari-gun, Ibaraki 315-0054 (JP)**
• **Okamoto, Yoshio**
**Higashiibaraki-gun, Ibaraki 319-0102 (JP)**
• **Kadomukai, Yuzo**
**Ishioka-shi, Ibaraki 315-0035 (JP)**
• **Togashi, Shigenori**
**Abiko-shi, Chiba 270-1165 (JP)**
• **Ishikawa, Tohru**
**Kitaibaraki-shi, Ibaraki 319-1702 (JP)**

(74) Representative: **Beetz & Partner**
**Steinsdorfstrasse 10**
**80538 München (DE)**

(56) References cited:
**EP-A- 0 310 819**          **DE-A- 4 405 921**
**US-A- 5 346 137**

Note: Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid. (Art.
99(1) European Patent Convention).

**Description**

Background of the Invention:

[Technical Field]

The present invention relates to a direct injection fuel injector and an internal combustion engine mounting a direct injection fuel injector and a fuel injector for forming a fuel spray having a superior ignition property and a superior combustion property and an internal combustion engine on which the fuel injector mounted and a fuel swirl type injector structure for injecting directly a fuel into a combustion chamber of a direct injection fuel injector type internal combustion engine and an internal combustion engine on which the fuel injector structure mounted.

[Prior Art]

Against an air intake conduit internal fuel injection apparatus to which a fuel is injected into an air intake conduit of an internal combustion engine, a direct injection fuel injection apparatus to which the fuel is injected directly into a combustion chamber has known.

As above stated direct injection gasoline internal combustion engine, there is disclosed in Japanese application patent laid-open publication No. Hei 6-146886. In this document, as a construction in which an installation position of a fuel injector has taken into consideration and according to an air intake port for extending in an upper portion from an air intake opening end a longitudinal swirl air intake flow (a tumble flow) in a combustion chamber, using a fuel thinner than a theoretical mixture of fuel and air a lean-burn combustion is carried out stably and a fuel consumption is improved.

Further, Japanese application patent laid-open publication No. Hei 8-42427 discloses about a fuel injector in which an orifice edge of a nozzle member is formed with a two-dimensional curvature face which is in perpendicular to a valve body axial line and a flat spray having an ellipse cross-sectional shape is generated and a fuel adhesion to an air intake valve is restrained.

In the above stated prior arts, it is not taken fully into consideration about the spray shape or an injection structure in which the ignition property (a spark property) and the combustion property (an unburned gas discharge amount reduction) can be improved each other. Namely, it is not studied fully about the means for generating the spray having a cross-section shape which is adopted to a machine and apparatus of a cylinder piston shape and a cavity shape, under a state where the spray rough particles are reduced.

To optimize of the spray which is injected according to the fuel injector, it is necessary to take into consideration of following characteristics. A first characteristic is the spray shape and a spray spreading angle and a reaching distance of the spray become as elements. A second characteristic is the spray particle diameter and it is necessary to improve an uniformity property of the spray particle diameter distribution to lessen a number of the spray large diameter particles as soon as possible. A third characteristic is the spray structure and it is necessary to make proper a spatial distribution of the sprayed fuel particles.

The inventors of the present invention have studied about the relation how the above stated spray properties related to the combustion property of the internal combustion engine according to the experimental analyze As à result the following facts have become clear. To the ignition property improvement, it is effective to make much the fuel particle distribution at a vicinity of a spark plug and to make high the mixture of fuel and air distribution to the spark plug direction.

On the other hand, when the fuel particle distribution to the piston direction is lessened, there is a tendency in which the unburned gas components (HC, CO) of the fuel is reduced, then the combustion property is improved.

EP 0 310 819 discloses a structure of an injection valve comprising a perforated body attached to the bottom side of the injection valve. The perforated body has a plurality of ejection apertures which proportion the amount of fuel flowing through by virtue of the geometry and align the injected fuel jet. The perforated body is intended to permit a simple adjustment of the size of the ejecting apertures.

In US 5,346,137 a fuel injection valve is shown having a dividing portion protruding from the top end face of the injecting nozzle. The dividing part is formed by walls substantially parallel to each other, with a fuel injection port interposed therebetween and arcuate walls connected to the parallel walls having a diameter larger than that of the fuel injection port. The walls extend from the nozzle in a direction of the valve axis. The purpose of the dividing part is to divide fuel, to equalize the divided fuel amounts and to atomize the injected fuel into fine particles with high accuracy.

DE 44 05 921 A1 shows an injection nozzle having a deflector surrounding an orifice of the nozzle partly or completely. The deflector is provided to deflect a rotationally symmetrical fuel jet flowing out from the nozzle in such a manner that the fuel is uniformly distributed within the combustion chamber of the engine.

## EP 1 108 885 B1

Summary of the Invention:

An object of the present invention is to provide a direct injection fuel injector and an internal combustion engine to which the fuel injector is mounted wherein a fuel spray enable to reduce a discharge amount of an unburned gas component of the fuel can be formed.

To attain the above stated object, according to the present invention, a fuel injector having the features of claim 1 is provided. At an orifice edge of a nozzle member of a fuel injector, a constriction of a spray flow is opened partially, including a center axial line of the orifice and further a flat face in parallel to the center axial line of the fuel injector is as a boundary, at one side a spray amount is formed much and at another side the spray amount is formed small, a spray angle is large in a direction in parallel to the flat face and the spray angle is small in a direction in vertical to the flat face, namely a flat inclined spray is formed.

In concretely, to a nozzle end face in which an outlet opening face of the orifice is formed, V groove is formed according to two inclination faces which incline with an optional angle against to the center axial line of the orifice or a substantially recess shape step-wise rectangular shape groove having different cut-off depths is formed.

As a result, to a groove direction the constriction of a spray flow can be opened, at a side of a large inclination angle or a side of a rectangular groove having a deep cut-off depth, the spray amount is formed much, but at a side of a small inclination angle or a side of a rectangular groove having a shallow cut-off depth, the spray amount is formed small, namely the flat inclined spray is formed.

To reach directly the spray to the ignition apparatus or to reach the spray to the ignition apparatus according to the induction by the cavity which is formed on the piston, the spray angle can be adjusted and accordingly it is possible to obtain the good ignition property of the internal combustion engine and to reduce the discharge amount of an unburned gas component of the combustion.

Brief Description of Drawings:

Fig. 1 is a cross-sectional view showing an electromagnetic system fuel injector of one embodiment according to the present invention;

Fig. 2A is an enlargement view showing a nozzle portion of the electromagnetic system fuel injector of Fig. 1;

Fig. 2B is a plan view of the nozzle member portion of Fig. 2A taken from an arrow mark N direction;

Fig. 3A is a schematic view showing a spray structure and a spray of the embodiment of Fig. 1 in relationship to a cylinder;

Fig. 3B is a lateral a spray of a case in which in which in the fuel injector of an embodiment a fuel is injected to an atmosphere;

Fig. 3C is a schematically a manner adopted to the internal combustion engine in which the fuel is directly injected to a combustion chamber;

Fig. 4A is an enlargement view showing one nozzle portion of the electromagnetic system fuel injector in which other construction explained from the embodiments from Fig. 1 to Fig. 3B is shown;

Fig. 4B is an enlargement view showing another nozzle portion of the electromagnetic system fuel injector in which other construction explained from the embodiments from Fig. 1 to Fig. 3B is shown;

Fig. 5A is an enlargement view showing a nozzle portion of the electromagnetic system fuel injector in which other construction from the embodiments from Fig. 1 to Fig. 3B is shown;

Fig. 5B is a plan view of the nozzle portion;

Fig. 5C is a longitudinal cross-sectional view of another nozzle member;

Fig. 5D a plan view of another nozzle portion;

Fig. 6A is an enlargement view showing a nozzle portion of the electromagnetic system fuel injector in which other construction from the embodiments from Fig. 1 to Fig. 3 is shown;

Fig. 6B is a plan view of the nozzle portion;

Fig. 7A is a cross-sectional view showing an electromagnetic system fuel injector of another embodiment according to the present invention;

Fig. 7B is a plan view of the nozzle portion;

Fig. 7C is a longitudinal cross-sectional view of another nozzle member;

Fig. 8A is a schematic view showing a change of an orifice edge of a fuel injector and a spray cross-sectional structure in a face which is orthogonal to an axial line of the fuel injector of Fig. 7A;

Fig. 8B is a schematically a lateral cross-sectional view from an arrow mark R in a cross-section X-X of Fig. 8A;

Fig. 9A is a cross-sectional view showing an electromagnetic system fuel injector of a further embodiment according to the present invention;

Fig. 9B is a plan view of the nozzle portion;

Fig. 10A is an essential cross-sectional view of a gasoline direct injection engine to which the electromagnetic system fuel injection according to the present invention is mounted;

Fig. 10B is a schematic view of a combustion chamber viewed from an arrow mark P side of Fig. 10A;

Fig. 10C is a schematic view of a piston head viewed from the arrow mark P side of Fig. 10A;

Fig. 11A is an essential cross-sectional view of the gasoline direct injection engine of another construction of the embodiment of Fig. 11A;

Fig. 11B is a schematic view of a piston head viewed from the arrow mark P side of Fig. 11A; and

Fig. 12 is an essential cross-sectional view of the gasoline direct injection engine of a further construction of the embodiment of Fig. 10A.

Description of the Invention:

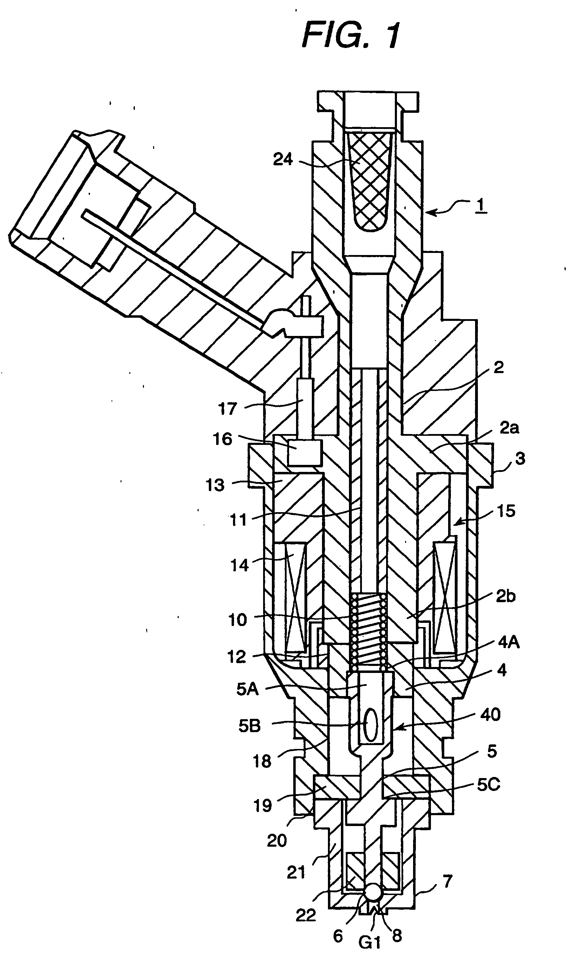

A direct injection fuel injector and an internal combustion engine on which the fuel injector is mounted of a first embodiment according to the present invention will be explained referring to from Fig. 1 to Fig. 6B. Fig. 1 shows a longitudinal cross-sectional view of an electromagnetic type fuel injector 1 according to the present invention and using this figure a structure and a motion of the electromagnetic type fuel injector 1 will be explained.

The electromagnetic fuel injector 1 injects the fuel by carrying out an opening operation and closing operation of a seat portion according to an ON-OFF signal of a duty which is executed by a control unit. A magnetic circuit is comprised of a yoke 3, a core 2 which comprises of a plug body portion for closing an opening end of the yoke 3 and a pillar shape portion 2b which extends in a central portion of the yoke 3, and an anchor 4 which opposes to face by separating an air gap.

At a center of the pillar shape portion 2b, a hole 4A is provided, this hole holds a spring member 10 as a spring member which is inserted to a valve body 40 to a seat face 9. The valve body 40 is comprised of the anchor 4, a rod 5 and a ball member 6 and the seat portion is provided at an upstream side of a fuel injector 8 which is formed in a nozzle member 7 and permits a passage of the fuel. An upper end of the spring member 10 is contacted to a lower end of a spring adjuster 11 which adjusts a set load and is passed through to the center of the core 2.

To a gap portion which faces between a side of the pillar shape portion 2b of the core 2 and a side of the valve body 40 of the yoke 3, so as to prevent an outflow of the fuel to a side of a coil 14, a sealing ring 12 is provided and this sealing ring is fixed mechanically between the both. The coil 14 for exciting the magnetic circuit is wound around a bobbin 13 and an outer periphery thereof is molded using a plastic material.

A terminal 17 of a coil assembly body 15 being comprised of the above stated members is inserted into a hole 16 which is provided on a brim portion 2a of the core 2. This terminal 17 is combined with a terminal of the control unit (not shown in figure).

To the yoke 3, an anchor receiving portion 18 for receiving the valve body 40 is opened, further a nozzle receiving portion 20 for having a larger diameter than a diameter of the anchor receiving portion 18 and for receiving a stopper 19 and the nozzle member 7 is penetrated to a tip end. The valve body 40 is comprised of the magnetic material made anchor 4, the rod 5 which one end thereof is formed integrally with the anchor 4, and the ball member 6 which is combined with a tip end portion of the rod 5. At a side of the anchor 4 of the rod 5, a hollow portion 5A for permitting the passing-through of the fuel is provided. To the hollow portion 5A, an outflow port 5B of the fuel is provided.

Further in the valve body 40, the outer periphery of the anchor 4 is contacted to the sealing ring 12 and a move in an axial direction thereof is guided. Further, the ball member 6 is guided by an inner peripheral face 23 of a fuel swirl element 22 which is inserted into an inner wall of a hollow portion of the nozzle member 7. To the nozzle member 7, successively the fuel swirl element 22 for guiding a vicinity of an end portion of the rod 5 to which the ball member 6 is joined, the seat face 9 to which the ball member is seated is formed, and to a central portion of a downstream of the seat face 9 the fuel injector 8 for permitting the passing-through of the fuel is provided.

Further, a stroke (a move amount in an axial upper portion in Fig. 1) of the valve body 40 is set with a dimension of the air gap between a receiving face 5C of a neck portion of the rod 5 and the stopper 19. Further, a filter 24 is provided to prevent an entrance of the dusts and the foreign matters in the fuel and in a piping to a side of a valve seat between the ball valve 6 and the seat face 9.

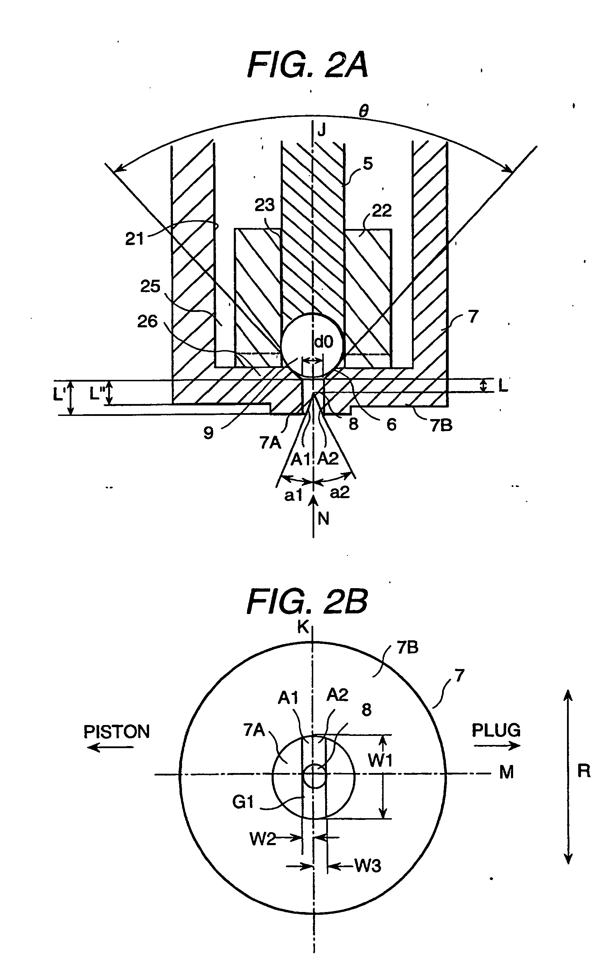

Next, referring to Fig. 2A and Fig. 2B, the nozzle member 7 to which V groove G1 (a groove G1 formed by two inclination faces having optional faces) of this embodiment according to the present invention will be explained. Fig. 2A shows an enlargement view of the nozzle member 7 portion of the electromagnetic type fuel injector 1 and Fig. 2A is a longitudinal cross-sectional view of the nozzle member 7 portion and Fig. 2B is a plan view of the nozzle member 7 portion of Fig. 2A taken from an arrow direction N direction.

In the fuel injector 8, the center of an orifice is coincided with an axial line (a valve axial center) J of the valve body and further a wall face of the orifice is formed in parallel with the axial line (the valve axial center) J of the valve body and a diameter having a size of d0 is formed.

Further, the seat face 9 of the nozzle member 7 is formed to have a seat angle of θ and a bottom face of the nozzle member 7 is constituted by a face 7B in orthogonal to the axial line J and a projection portion 7A. In V groove type cut-off faces A1 and A2 of the fuel injection hole 8, the fuel injection hole outlet faces thereof are formed to have inclination angles of a1 and a2 against the axial line (the valve axial center) of the valve body 40 and a center axis (the fuel injection direction) of the fuel injection hole 8 and a length of V groove G1 is formed with W1.

In this time, with respect to an orifice length, the deepest portion of the cut-off portion is with L' and a non-cut-off portion (the smallest cut-off) is L" and a tip end face of the nozzle member 7 is formed with one plan face in vertical to the axial line J and two inclination faces for connecting to this plan face.

In this embodiment according to the present invention, the projection portion 7A is formed to the outlet portion of the fuel injection hole 8 at the tip end of the nozzle member 7, however it is not necessary to provide the projection portion 7A. In the structure in which the projection portion 7A is not provided, the orifice length of the non cut-off portion (the minimum cut-off portion) is L". In this time the size relation of the orifice length becomes L'> L" > L. However, by the provision of the projection portion 7A, by the weight increase of the projection portion 7A, the large inclination angles of a1 and a2 can be constituted.

Further, in this embodiment according the present invention, against the case where the tip end face of the nozzle member 7 is formed with the flat face, by the provision of the projection portion 7A, by adjusting the both of this projection portion 7A and the cut-off depth, between from the minimum orifice length L to the maximum orifice length L' the necessary inclination angles of a1 and a2 can be realized.

On the other hand, without the provision of the projection portion 7A by adjusting only the cut-off depth, namely by adjusting only the orifice length L, the necessary inclination angles of a1 and a2 can be realized. Further, the cut-off portion is provided only to the projection portion 7A, and within a range from the maximum orifice length L' to the minimum orifice length L" the inclination angles of a1 and a2 can be constituted.

Further, the groove length W1 is not limited in the projection portion 7A but V groove G1 can be extended to the bottom face 7B. In this case, the flat degree of the spray can be strengthen to an arrow mark R direction.

In V groove G1 in this embodiment according to the present invention, to the tip end face (the nozzle tip end face) of the projection portion 7A to which the outlet opening face of the fuel injection hole 8 is formed, the groove portion extending in the both sides of the outlet opening including the outlet opening is formed. Further, in V groove G1, within the distance from the center axis line of the fuel injection hole 8 to the both side walls for forming the groove, one of the distance W3 ("PLUG" side) is formed longer than another of the distance W2 ("PISTON" side) (W3 > W2).

To explain the installation manner to the internal combustion engine stated in the latter part, in Fig. 2B, the arrow mark "PLUG" and the arrow mark "PISTON" are defined. Herein, a line K is a line which passes through the center of the fuel injection hole 8 and is parallel to the cut-off face A1 and a line M is a line which passes through the center of the fuel injection hole 8 and is orthogonal to the line K. The arrow mark "PLUG" and the arrow mark "PISTON" are parallel to the line M.

In the above stated structure, "the cut-off" in the cut-off face A1 etc. is not limited to the processing manner but it means the shape in which a part thereof is removed, as a result it is not to limit to the body which using the cutting processing is cut off actually. Namely, the press processing (the deformation processing) using the die material and the processing of the casting processing and the like can be employed. This is similar to the following embodiments. Further, the ball member 6 is not necessary to have the sphere shape. Namely, the cone shape needle valve can be employed.

Further, in Fig. 2A and Fig. 2B, to the fuel swirl element 22, an axial direction groove 25 and a radial direction groove 26 are provided. In this embodiment according to the present invention, the axial direction groove 25 is formed with D shape cut face which is provided to an outer periphery of a substantially cylindrical shape fuel swirl element 22 but a ring shape passages and the like can be employed.

These axial direction groove 25 and the radial erection groove 26 are the fuel passages in which from a valve upper portion the fuel is introduced, the fuel which has passed through the axial direction groove 25 is eccentricity introduced from the axial center in the radial direction groove 26, namely the fuel is given the swirl and the fuel is promoted the atomization during the injection from the fuel injection hole which is provided to the nozzle member 7. Herein, the swirl strength (the swirl number S) given by the fuel swirl element 22 is requested by a following formula.

[formula 1]

$$S = \text{(angle move amount)} / \text{(move amount in fuel injection}$$

$$\text{axial direction) x (orifice radius)}$$

$$= (2 \times d0 \times Ls) / (n \times ds^2 \times \cos(\theta/2))$$

Herein,

d0 :    fuel injection hole diameter

Ls :    groove eccentric amount (distance between valve axial center and groove (width) center)

n :    groove number of fuel swirl element

θ :    valve seat angle

ds :    2 x w x h / w + h
(hydraulic equivalent diameter, it is expressed by using groove width w and groove height h)

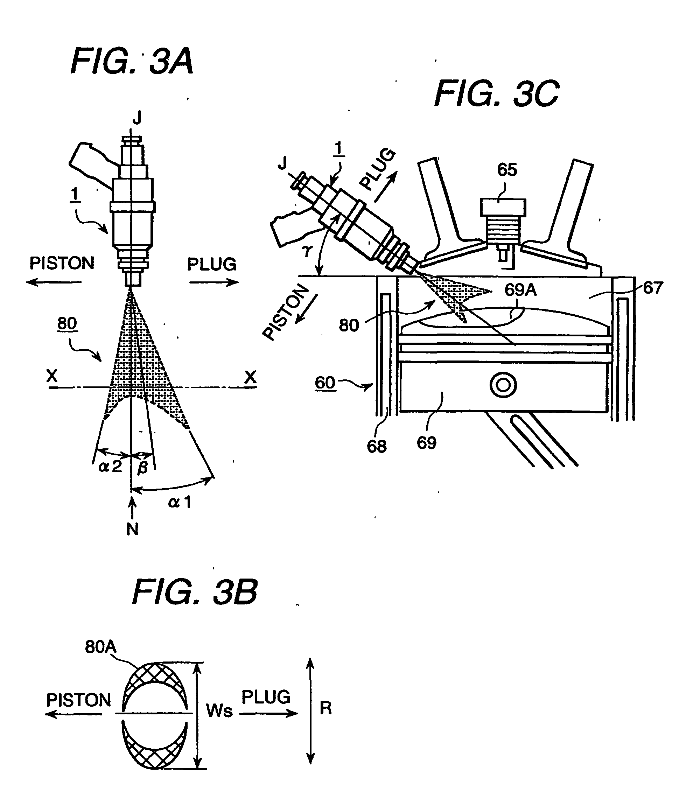

When the swirl number S is made large, the atomization is promoted and the spray is dispersed. In this embodiment according to the present invention, the fuel injection hole 8 is provided in parallel to the valve body axial line J but the fuel injection hole 8 can be inclined with the valve body axial line and the flat spray generation can be promoted.
The operation of this fuel injector 1 constituted with the above will be explained. In the fuel injector 1, according to the electric ON-OFF signal given on the electromagnetic coil 14, by moving upwardly and downwardly the valve body 40 in the axial direction an opening and closing of a gap between the ball member 6 and the coil 14 is carried out and accordingly the injection control of the fuel is carried out.
When the electric signal is given to the coil 14, the magnetic circuit is formed with the core 2, the yoke 3 and the anchor 4 and then the anchor 4 is attracted to the core 2 side. When the anchor 4 is moved, the ball member 6 being as one body with the anchor 4 is moved and is separated from the seat face 9 of the valve seat of the nozzle member 7 and the fuel injection hole 8 is opened. The fuel flows into the interior portion of the fuel injector 1 for the filter 24 and reaches to the downstream from the cavity portion 5A which is provided in the interior passage of the core 2, the outer peripheral portion of the anchor 4 and permits the passing-through the fuel through the outflow port 5B.
The fuel passes through the gap formed between the stopper 19 and the rod 5, the axial direction fuel passage 25 of the fuel swirl element 22, a swirl groove 30 and is swirl-supplied to the seat portion and during the valve opening operation the fuel is injected from the fuel injection hole 8.
Next, using Fig. 3A, Fig. 3B and Fig. 3C , the spray structure obtained by the injector of this embodiment will be explained.
Fig. 3A is shows the spray of the case in which in the fuel injector of this embodiment the fuel is injected to the atmosphere and Fig. 3B shows a lateral cross-sectional view in which the spray in a cross-section X-X of Fig. 3A is viewed from an arrow mark N, and Fig. 3C shows schematically the manner adopted to the internal combustion engine in which the fuel is directly injected to the combustion chamber (the cylinder).
As shown in Fig. 3A, the spray which is injected from the fuel injector 1 of this embodiment according to the present invention is deflected to the arrow mark "PLUG" side with a deflection angle of β and the axial deflection side the mixture of fuel and air of the combustible concentration and the arrow mark "PISTON" side the mixture having the combustible concentration the combustible concentration is lessened and it takes a distribution has a region 80 in which "PLUG" side spray angle of $\alpha 1$ is larger than "PISTON" side spray angle of $\alpha 2$.
Namely, in this embodiment according to the present invention, the inclination angles of the two faces which constitute V groove are changed, the opening degree of the constriction of the fuel passage is made with a non-symmetric shape against the axial line J shown in Fig. 2A and the spray fuel amount at the larger inclination face angle is made much and at the smaller inclination face angle side the spray flow amount is made small, then the spray is deflected. Namely, the inclination angle a1 of V groove type cut-off face is set larger than the inclination angle a2, the spray which is deflected to V groove type cut-off face A2 side can be generated. Herein, the deflection angle β is requested according to a following formula.

[formula 2]

$$\beta = (\alpha 1 - \alpha 2) / 2$$

Further, as shown in Fig. 3B, the spray lateral cross-section is guided by V type groove G1 and is diffused and further is flatten (prolonged) in the arrow mark R direction and accordingly the distribution having an area 80A is formed, namely to the "PLUG" side the mixture of fuel and air having the combustible concentration is made much and at the arrow mark "PISTON" side the mixture of fuel and air having the combustible concentration is small.

Further, when the fuel injector 1 of this embodiment according to the present invention is installed to an installation angle of $\gamma$, the direction of the arrow mark "PLUG" and the direction of the arrow mark "PISTON" as shown in Fig. 3C against the internal combustion engine 60, the mixture of fuel and air is injected to be received in a cavity 69A of a piston 69 which is installed enable to reciprocate in a cylinder 68 and at the ignition apparatus 65 side the combustible mixture of fuel and air is formed comparatively much and at the piston 69 side the combustible mixture of fuel and air is formed comparatively thin and the distribution becomes an area 80.

Further, in Fig. 3C, in the combustion chamber 67, the flow of the gaseous body except for the spray does not exist and the pressure in the cylinder is substantially same to the atmospheric pressure.

Further, in this embodiment according to the present invention, the spray particle diameter is carried out the atomization by imparting the swirl force to the fuel according to the fuel swirl element 22 which is provided in the nozzle member 7.

In general, between the diameter d0 and the orifice length L' of the fuel injection hole 8, the spray angles $\alpha$ 1 and $\alpha$ 2, against the diameter d0 of the fuel injection hole 8 when the orifice length L' is made large, namely a ratio of L' / d0 is made large, there is a tendency that the spray angles $\alpha$ 1 and $\alpha$2 are became small.

Further, when the inclination angles a1 and a2 of the inclination angles A1 and A2, there is a tendency that the spray angles $\alpha$ 1 and $\alpha$ 2 are became small. Following to this tendency, according to the installation angle ($10°$ - $50°$) of the fuel injector, to obtain desirable spray angles $\alpha$1 and $\alpha$2, it be can adjusted according to the diameter d0, the orifice length L' of v groove shape cut-off portion, and the inclination angles a1 and a2.

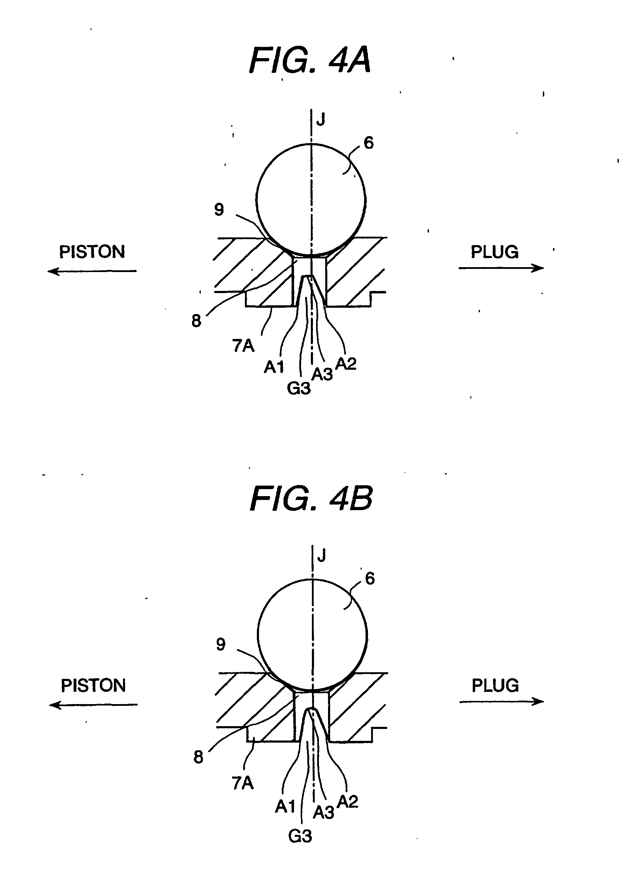

Further, a shape of V type groove G2 can be formed with a shape in which as shown in Fig. 4A to the valve body axial line J a third substantially vertical face A3 is included. Further, the above stated vertical face A3 can be formed by a two dimensional curvature face as shown in Fig. 4B. As a result, a substantial V groove G3 is formed.

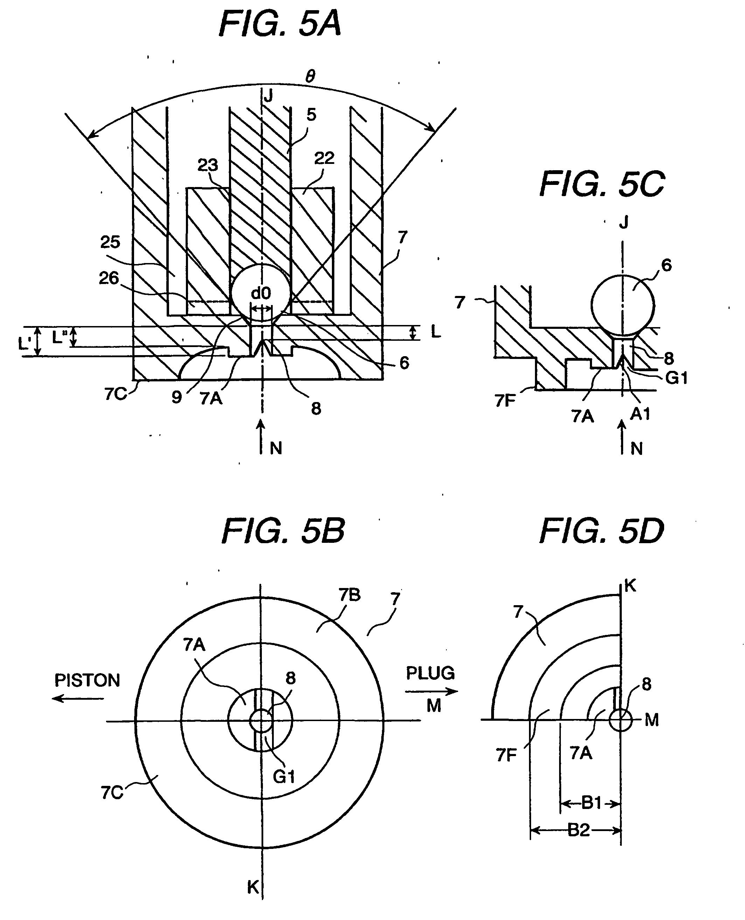

Further, the nozzle member 7 portion of the electromagnetic system fuel injector 1 can be constituted a construction as shown in Fig. 5A and Fig. 5B. Fig. 5A shows an enlargement view of the nozzle member 7 portion.of the electromagnetic system fuel injector 1, Fig. 5A and Fig. 5C are longitudinal cross-sectional views of the nozzle member 7 portion, Fig. 5B and Fig. 5D are plan views of Fig. 5A and Fig. 5D which are viewed from the arrow mark N direction of the nozzle member 7 portion.

The different point of the nozzle member 7 portion of the electromagnetic system fuel injector 1 shown in Fig. 5A and Fig. 5B with the nozzle member 7 portion of the electromagnetic system fuel injector 1 explained in Fig. 2A and Fig. 2B is that at an outer peripheral portion of the bottom face of the nozzle member 7 portion a thick portion 7C is provided.

Namely, in this construction, according to the thick portion 7C, the vibration noises during the seating operation of the ball member 6 to the seat face 9 can be reduced. Further, as shown in Fig. 5C and Fig. 5D according to the provision of the distance B1 from the center of the injection hole 8, and according to a substantially ring shape thick portion 7F having a thickness (B2 - B1), the vibration noise reduction can be performed.

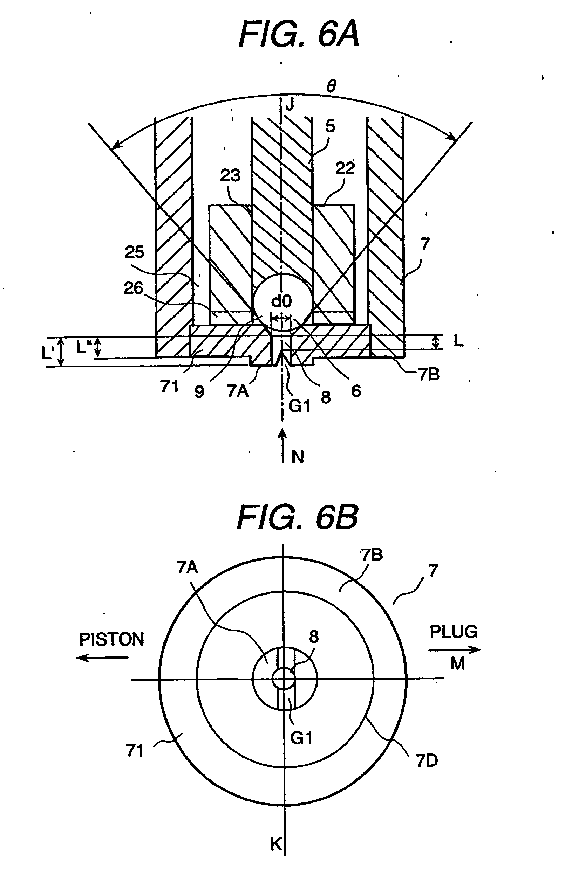

Further, the nozzle member 7 portion of the electromagnetic system fuel injector 1 can be constituted a construction as shown in Fig. 6A and Fig. 6B. Fig. 6A shows an enlargement view of the nozzle member 7 portion of the electromagnetic system fuel injector 1, Fig. 6A is longitudinal cross-sectional view of the nozzle member 7 portion, Fig. 6B is a plan view of Fig. 6A which is viewed from the arrow mark N direction of the nozzle member 7 portion.

The different point of the nozzle member 7 portion of the electromagnetic system fuel injector 1 shown in Fig. 6 with the nozzle member 7 portion of the electromagnetic system fuel injector 1 explained in Fig. 2A and Fig. 2B is that at a bottom face of the nozzle member 7 portion is constituted from a nozzle bottom portion 71 which is welded along to a joining portion 7D. Namely, in this construction, parts which can alter suitably according to the volume of the engine and the installation angle of the fuel injector are assembled to only the nozzle bottom portion 71 and then it can expect to improve the productivity property.

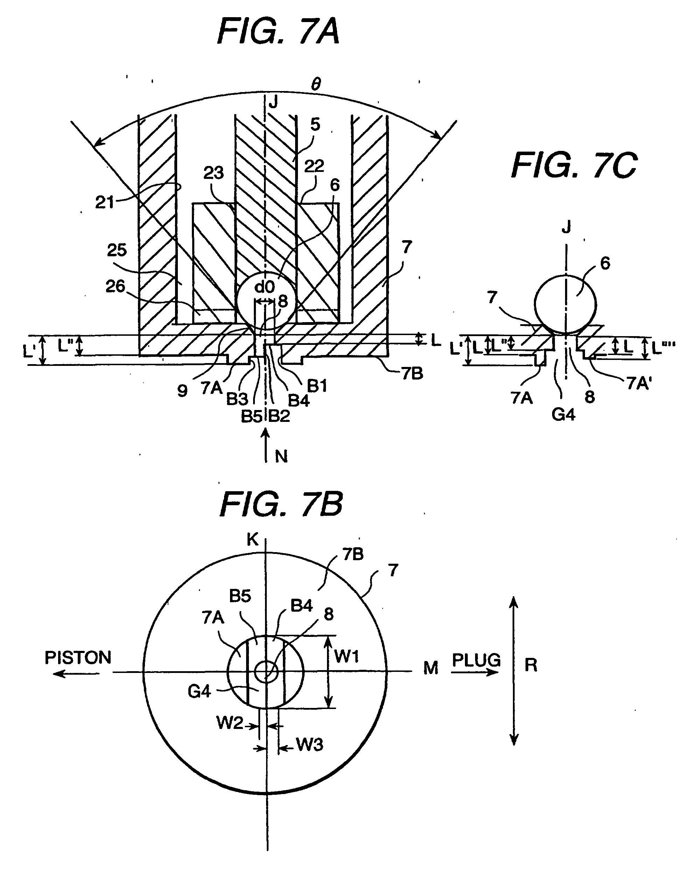

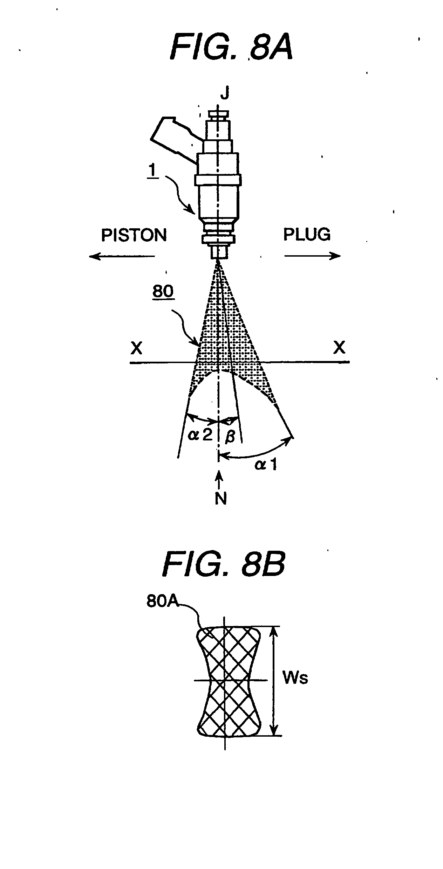

Referring to Fig. 7A, Fig. 7B and Fig. 8A and Fig. 8B, another embodiment according to the present invention will be explained.

Fig. 7A shows an enlargement view of the nozzle member 7 portion of the electromagnetic system fuel injector 1, Fig. 7A and Fig. 7B are longitudinal cross-sectional views of the nozzle member 7 portion, Fig. 7B is a plan view of Fig. 7A which is viewed from the arrow mark N direction of the nozzle member 7 portion.

The different points of this embodiment according to the present invention with the embodiment shown in from Fig. 1 to Fig. 6B are that in place of V groove type cut-off faces A1 and A2, a step-wise rectangular type groove G4, which is constituted of faces B1, B2 and B3 which is in parallel or substantially in parallel to the axial line J against to the outlet portion of the fuel injection hole 8 and faces B4 and B5 which is orthogonal to the axial line J, is formed. Namely, in this embodiment according to the present invention, since a wall face of the fuel injection hole 8 which restricts the flow of the fuel is taken out in a rectangular form, the opening degree against the fuel flow is strengthened.

Accordingly, this is effective to generate the spray having the strong flat. Further, to promote the diffusion and the dispersion of the spray, it is effective to form the comparative solid cone spray. Further, the comparative solid cone spray is generated, it is possible to generate the spray which hardly receives an affect to a fluctuation of the pressure in the cylinder and as a result it can adjust the spray spreading angle and the spray reaching distance. As to the spray particle diameter, the same effect to the first embodiment according to the present invention can be obtained.

Further, since an orifice length L''' of the step-wise rectangular shape groove G4 is made larger than the orifice length L, it is possible to deflect the spray in "PLUG" side. The other constructions are same to the first embodiment according to the present invention. Further, as shown in Fig. 7B, it can constitute a construction in which "PLUG" side of the projection portion 7A is cut off with (L' - L'''').

In this embodiment according to the present invention, the consideration about the orifice lengths L, L' and L'' is same to the above stated embodiment.

Next, referring to Fig. 8A and Fig. 8B, the spray structure of this embodiment according to the present invention will be explained.

Fig. 8A shows the spray in a case where the fuel injector of this embodiment according to the present invention injects the fuel in the atmosphere, and Fig. 8B shows schematically the lateral cross-sectional view viewed from an arrow mark R of the spray in a cross-section X-X of Fig. 8A.

With the fuel injector of this embodiment according to the present invention, a flat defection spray similar to that of shown in Fig. 3A and Fig. 3B which is explained in the above stated embodiment, according to the provision of the step-wise rectangular shape groove G4, in the spray the opening degree of the fuel is strengthened and to promote the diffusion and dispersion of the spray, a comparative solid cone spray shape can be obtained.

Further, since the spray is diffused by guiding by the rectangular groove, as shown in Fig. 8B, the distribution of an area 80A having a substantially rectangular shape or a substantially drum shape having a length of Ws can be obtained. The face of the fuel injection hole is constituted by one deflection face, it is possible to realize the spray having the low convergence and the high homogenous spray.

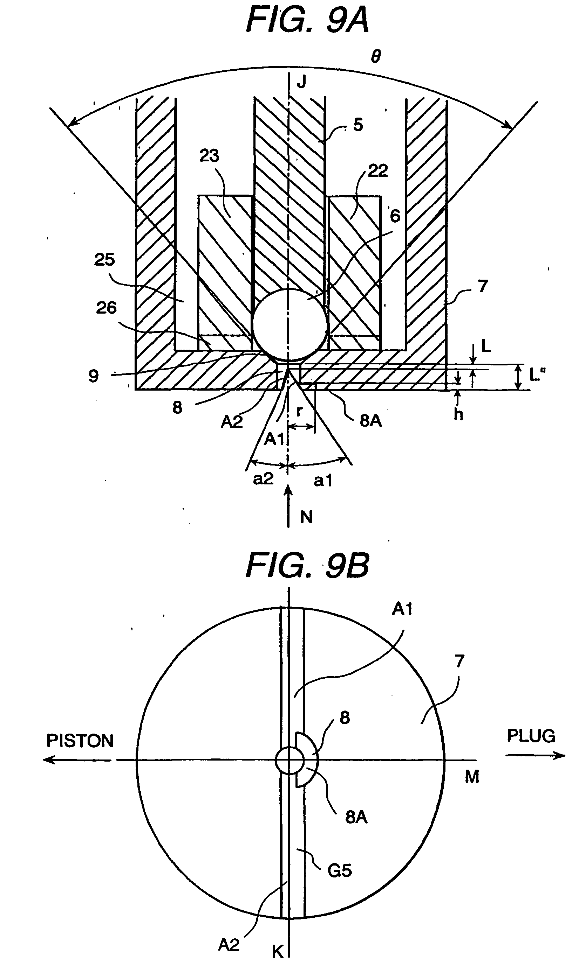

Referring to Fig. 9A and 9B, another embodiment according to the present invention will be explained.

The different points of this embodiment according to the present invention with the above stated embodiment is that to V groove type cut-off face A1, a second office which is defined by a radius r and a depth d is formed. Namely, in this embodiment according to the present invention, in addition to V type groove G5, since the wall face of the fuel injection hole 8 which restricts the flow of the fuel is taken off with a cylindrical form, the opening degree against to the fuel flow is strengthened. Other constructions are same to those of the first embodiment according to the present invention.

In this embodiment according to the present invention, since the spray cross-section which is guided to the above stated second orifice 8A side is diffused in a substantially semicircle shape, it is effective to generate the spray having the large deflection degree. As to the spray shape and the spray particle diameter, the effects same to those of the first embodiment according to the present invention can be obtained.

In this embodiment, the consideration about the orifice lengths L' and L'' is same to the above stated embodiment.

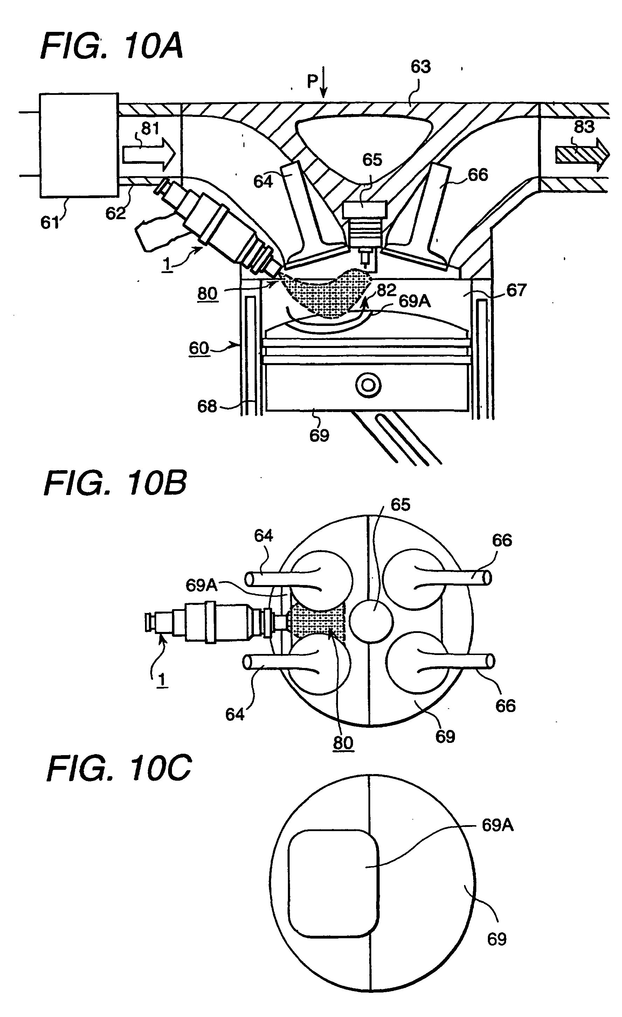

Fig. 10A is a longitudinal cross-section view showing an embodiment of an internal combustion engine to which the fuel injector according to the present invention is mounted, Fig. 10B is a schematic view of a combustion chamber viewed from an arrow mark P side of Fig. 10A, Fig. 10C is a schematic view of a piston head viewed from the arrow mark P.

A piston 69 which is provided for enable to reciprocate in a cylinder 68 is moved upwardly and downwardly in the cylinder 68 in response to the rotation of a crank shaft (not shown in figure). To an upper portion of the cylinder 68, a cylinder head 63 is installed and this cylinder head 63 forms an enclosed space together with the cylinder 68.

To the cylinder head 63, an air intake manifold 62 for introducing an outer portion air into the cylinder 68 through an air inhale amount controlling apparatus 61 to which a throttle valve is installed and an air exhaust manifold for introducing a combustion gas into an air exhaust apparatus which has combusted in the cylinder 68 are formed.

To the air intake manifold 62 side an air intake valve 64 is provided, to a center portion an ignition apparatus 65 is provided, and to an opposed side of the air intake valve 64, an air exhaust valve 66 is provided, respectively. The air intake valve 64 and the air exhaust valve 66 are provided to extend into the combustion chamber 67. Herein, the fuel injector 1 is installed to a vicinity of a combination portion of the air intake manifold 62 of the cylinder head 63 and an axis of the fuel injector 1 is set to have a little downward direction in the combustion chamber 67. In generally, the installation angle γ of the injector is 10 - 50 degree.

A reference numeral 69 indicates a piston and a reference numeral 69A indicates a cavity (a recessed portion) which is provided to the piston 69. The fuel injection hole of the fuel injector 1 is directed for the cavity 69A which is provided to the piston 69. A blank arrow mark 81 in the figure shows a flow of the intake air and a hatched arrow mark 83 shows a flow of the exhaust air, respectively.

The fuel in the internal combustion engine 60 is supplied directly to the combustion chamber 67 according to the fuel injector 1 by suiting an air intake timing and immediately before the spark the fuel is distributed as the area 80. The fuel which has atomized according to the injection is promoted the mixture of fuel and air with the air flow (the swirl flow) 82 which is led through the air intake manifold 62 in the combustion chamber 67 and is converged in the cavity 69A.

As to the distribution stated of the spray, since the mixture of fuel and air having the combustible concentration is much in the ignition apparatus 65 but the mixture of fuel and air is small in the cavity 69A side, the mixture of fuel and air is not send excessively to the piston 69. The mixture of fuel and air thereafter is compressed in a compression stroke and is sparked stably in the ignition apparatus 65 and accordingly the stable combustion in which the discharge amount of the unburned gas is restrained can be realized.

The above stated gasoline direct injection engine 60 generates the air intake swirl in the combustion chamber 67 and without the wide alternation of the cylinder head 63 of the conventional engine the thin combustion can be realized.

Further, the fuel injector 1 of the above stated respective embodiments according to the present invention can be carried out by cutting off the part of the wall face which forms the injection hole at the outlet portion of the fuel injection hole, or to be varied the injection hole length of the fuel injection hole in the circumferential direction of the fuel injection hole by providing the step-wise to the outlet opening portion of the fuel injection hole, or by forming the recessed portion to the nozzle tip end face including the wall face which forms the fuel injection hole.

From another standpoint about these embodiments according to the present invention , the part of the wall face which forms the fuel injection hole is provided to extend in the downstream side (the tip end side of the nozzle member) from other parts.

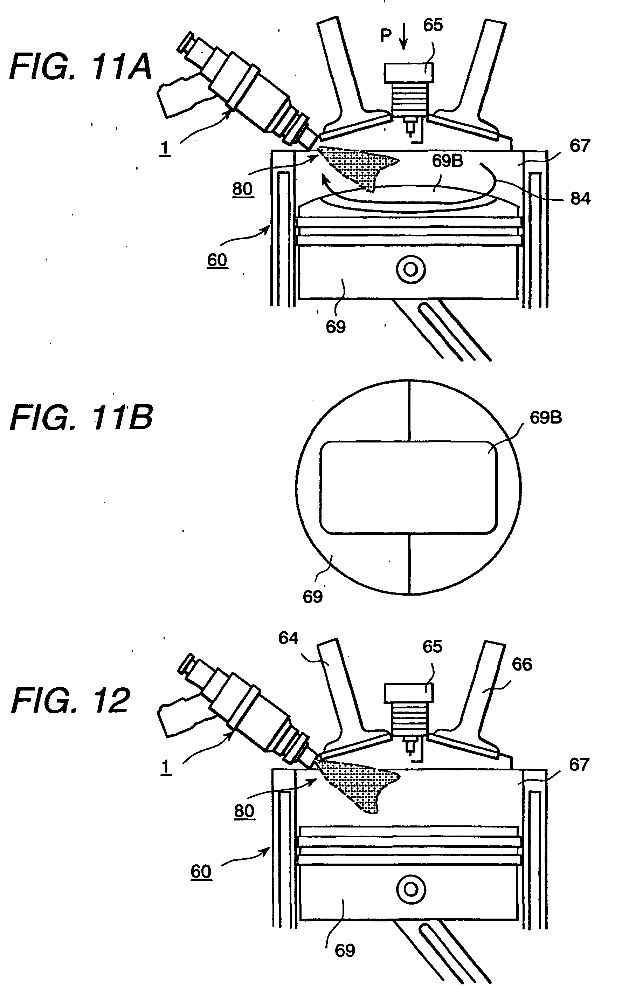

Further, the internal combustion engine on which the fuel injector according to the present invention is mounted can be constituted by one as shown in Fig. 11A. Fig. 11A is a longitudinal cross-sectional view showing an embodiment of an internal combustion engine to which the fuel injector according to the present invention is mounted, and Fig. 11B is a schematic view of a piston head viewed from an arrow mark P.

The different point of the internal combustion engine 60 shown in Fig. 11 with the internal combustion engine explained in Fig. 9 is that a cavity 69B for carrying out the mixture of fuel and air formation using a tumble flow 84 is provided. Namely, in this construction, according to the tumble flow induced by the cavity 69B, it is possible to transfer the mixture of fuel and air 80 having the combustible concentration to the ignition apparatus 65.

Further, the internal combustion engine on which the fuel injector according to the present invention is mounted can be constituted by one as shown in Fig. 12. Fig. 12 is a longitudinal cross-sectional view showing an embodiment of an internal combustion engine to which the fuel injector according the present invention is mounted.

The different point of the internal combustion engine 60 shown in Fig. 12 with the internal combustion engine explained in Fig. 10 is that a flat piston 69 having no cavity for inducing the in-cylinder flow of the swirl flow 82 and the tumble flow 84 and the like is provided. Namely, in this embodiment according to the present invention, by adjusting the orifice lengths of L, L', L'', the diameter of the fuel injection hole d0, and the distances W1, W2, W3 explained in Fig. 2 and Fig. 3, suitable spray angles $\alpha 1$, $\alpha 2$ and $\beta$ can be set, without the use of the swirl flow or the tumble flow, or with the comparatively weak swirl or tumble, it is possible to reach the mixture of fuel and air 80 having the combustible concentration to the ignition apparatus 65.

According to the present invention, including a center axial line of the fuel injection hole and further a flat face in parallel to the center axial line of the fuel injector is as a boundary, at one side a spray amount is formed much and at another side the spray amount is formed small, a spray angle is formed large in a direction in parallel to the flat face and the spray angle is formed small in a direction vertical to the flat face, namely a flat inclined spray is formed.

**Claims**

**1.** A fuel injector (1) having an injection hole (8), a valve seat arranged at an upstream of said injection hole (8), a swirl passage for imparting a swirl force to a fuel at an upstream side of said valve seat, a valve body for carrying out an opening operation and a closing operation of a fuel passage at said valve seat, a nozzle member (7) in which said injection hole (8) is formed having an outlet opening face formed at a tip end face of said nozzle member, and a driving means for driving said valve body to an axial direction thereof,
**characterized in that**
a groove is formed in said tip end face of said nozzle member, wherein wall side faces (A1, A2, B1, B2, B3) of said groove extend in a depth direction of said nozzle member on both sides of said outlet opening face such that the groove cuts off a part of a wall face of said injection hole, wherein said groove is a substantially V-shaped groove having two inclination faces which are inclined at optional angles against a center axial line of said injection hole (8), or wherein said groove is formed in the shape of a step-wise groove having different cut-off depths.

**2.** Fuel injector according to claim 1, **characterized in that** within a distance from a center axial line of said injection hole (8) to both side walls, said groove is formed such that one distance is longer than another distance.

3. Internal combustion engine (60) having a cylinder (68), a piston (69) which reciprocates in said cylinder (68), an air intake means for introducing an air into said cylinder (68), an air exhaust means for exhausting a combustion gas from said cylinder (68), a fuel supply means for supplying the fuel from a fuel tank, a cavity for catching a mixture of fuel and air introduced into said cylinder (68) according to said air intake means and fuel injected into said cylinder (68), an ignition apparatus (65) for igniting said mixture of fuel and air, and a fuel injector (1) **, characterized in that** the fuel injector (1) is an injector according to one of claims 1 or 2 for injecting directly a fuel into said cylinder (68).

4. Internal combustion engine (60) according to claim 3, **characterized by** a flat inclined spray in which to a side of said ignition apparatus (65) a spray concentration is formed high and to a side of said piston (69) of said internal combustion engine is formed thin, wherein by converging said flat inclined spray to said cavity, said flat inclined spray is induced to said ignition apparatus of said internal combustion engine.

**Patentansprüche**

1. Ein Kraftstoffeinspritzeinrichtung (1) mit einer Einspritzbohrung (8), einem Ventilsitz der stromaufwärts der Einspritzbohrung (8) angeordnet ist, einem Verwirbelkanal zum Beaufschlagen eines Kraftstoffs mit einer Verwirbelkraft auf einer stromauf liegenden Seite des Ventilsitzes, einem Ventilkörper zum Öffnen und Schließen eines Kraftstoffkanals an dem Ventilsitz, einem Düsenelement (7) in dem die Einspritzbohrung (8) ausgebildet ist, mit einer Auslassöffnungsfläche an einer Düsenendfläche des Düsenelements, und einer Antriebseinrichtung zum Antreiben des Ventilkörpers in axialer Richtung,
**dadurch gekennzeichnet, dass**
eine Rille in der Düsenendfläche des Düsenelements ausgebildet ist, wobei sich die Wandseitenflächen (A1, A2, B1, B2, B3) der Rille auf beiden Seiten der Auslassöffnungsfläche in eine Tiefenrichtung hinein in das Düsenelement erstrecken, so dass die Rille einen Teil einer Wandfläche der Einspritzbohrung wegschneidet, wobei die Rille im wesentlichen eine V-förmige Rille mit zwei geneigten Flächen ist, die in beliebigen Winkeln gegen eine Mittelachse der Einspritzbohrung (8) geneigt sind, oder wobei die Rille in Form einer abgestuften Rille mit verschiedenen Ausschnitttiefen ausgebildet ist.

2. Kraftstoffeinspritzeinrichtung nach Anspruch 1, **dadurch gekennzeichnet, dass**
innerhalb eines Abstands von einer Mittelachse der Einspritzbohrung (8) zu beiden Seitenwänden hin die Rille derart ausgebildet ist, dass ein Abstand größer als der andere Abstand ist.

3. Brennkraftmaschine (60) mit einem Zylinder (68), einem Kolben (69), der sich in dem Zylinder (68) hin- und herbewegt, einer Lufteinlasseinrichtung zum Einführen von Luft in den Zylinder (68), einer Luftauslasseinrichtung zum Auslassen eines Verbrennungsgases aus dem Zylinder (68), einer Kraftstoffzuführeinrichtung zum Zuführen des Kraftstoffs von einem Kraftstofftank, einer Vertiefung zum Aufnehmen einer Mischung aus Kraftstoff und Luft, die in den Zylinder (68) entsprechend der Lufteinlasseinrichtung und dem in den Zylinder (68) eingespritzten Kraftstoff eingeführt wurde, einer Zündvorrichtung (65) zum Zünden der Mischung aus Kraftstoff und Luft und einem Kraftstoffeinspritzeinrichtung (1),
**dadurch gekennzeichnet, dass**
die Kraftstoffeinspritzeinrichtung (1) ein Einspritzeinrichtung nach einem der Ansprüche 1 oder 2 zum direkten Einspritzen eines Kraftstoffes in den Zylinder (68) ist.

4. Brennkraftmaschine (60) nach Anspruch 3, **gekennzeichnet durch** einen flach geneigten Sprühstrahl, in dem auf einer Seite hin zu der Zündvorrichtung (65) eine Sprühkonzentration hoch ausgebildet ist und auf einer Seite hin zu dem Kolben (69) der Brennkraftmaschine niedrig ausgebildet ist, wobei **durch** Ausrichten des flach geneigten Sprühstrahls zu der Vertiefung hin, der flach geneigte Sprühstrahl hin zu der Zündvorrichtung der Brennkraftmaschine geführt wird.

**Revendications**

1. Un injecteur de carburant (1) possédant un orifice d'injection (8), un siège de soupape disposé en amont dudit orifice d'injection (8), un conduit de turbulence permettant de transmettre une force de turbulence à un carburant en amont dudit siège de soupape, un corps de soupape permettant d'effectuer une opération d'ouverture et une opération de fermeture d'un conduit de carburant au niveau dudit siège de soupape, une buse (7) dans laquelle est formé ledit orifice d'injection (8) possédant une face d'ouverture de refoulement formée au niveau d'une face extrême de ladite buse, et un dispositif de commande permettant de commander ledit corps de soupape dans une direction axiale de celui-ci, **caractérisé en ce que**

une gorge est formée dans ladite face extrême de ladite buse, dans laquelle les faces latérales de paroi (A1, A2, B1, B2, B3) de ladite gorge s'étendent dans le sens de la profondeur de ladite buse sur les deux côtés de ladite face d'ouverture de refoulement de sorte que la gorge découpe une partie d'une face de paroi dudit orifice d'injection, dans lequel ladite gorge est en forme de V possédant deux faces d'inclinaison qui sont inclinées selon des angles optionnels par rapport à une ligne axiale centrale dudit orifice d'injection (8), ou

dans lequel ladite gorge est formée sous la forme d'une gorge étagée ayant différentes profondeurs découpées.

2. L'injecteur de carburant selon la revendication 1, **caractérisé en ce que** dans les limites d'une distance allant d'une ligne axiale centrale dudit orifice d'injection (8) aux deux parois latérales, ladite gorge est formée de sorte que l'une des distances est supérieure à l'autre distance.

3. Le moteur à combustion interne (60) possédant un cylindre (68), un piston (69) qui effectue un mouvement de va-et-vient dans ledit cylindre (68), un dispositif d'admission d'air permettant d'introduire de l'air dans ledit cylindre (68), un dispositif d'évacuation d'air permettant d'évacuer un gaz de combustion dudit cylindre (68), un dispositif d'alimentation en carburant permettant de fournir le carburant provenant d'un réservoir de carburant, une cavité permettant de capturer un mélange de carburant et d'air introduit dans ledit cylindre (68) en fonction dudit dispositif d'admission d'air et du carburant injecté dans ledit cylindre (68), un dispositif d'allumage (65) permettant d'allumer ledit mélange de carburant et d'air, et un injecteur de carburant (1), **caractérisé en ce que** l'injecteur de carburant (1) est un injecteur selon l'une des revendications 1 ou 2 permettant d'injecter directement du carburant dans ledit cylindre (68).

4. Un moteur à combustion interne (60) selon la revendication 3, **caractérisé par** un jet incliné plat dans lequel, du côté dudit dispositif d'allumage (65), une concentration de jet est formée de manière à être élevée et, du côté dudit piston (69) dudit moteur à combustion interne, une concentration de jet est formée de manière à être pauvre, dans lequel en faisant converger ledit jet incliné plat vers ladite cavité, ledit jet incliné plat est admis vers ledit dispositif d'allumage dudit moteur à combustion interne.

# FIG. 1

# FIG. 2A

# FIG. 2B

FIG. 3A

FIG. 3C

FIG. 3B

# FIG. 4A

J
6
9
PISTON
8
7A
A1
G3
A3
A2
PLUG

# FIG. 4B

J
6
9
PISTON
8
7A
A1
G3
A3
A2
PLUG

## FIG. 5A

## FIG. 5C

## FIG. 5B

## FIG. 5D

## FIG. 6A

## FIG. 6B

EP 1 108 885 B1

# FIG. 7A

# FIG. 7C

# FIG. 7B

## FIG. 8A

## FIG. 8B

## FIG. 9A

## FIG. 9B

FIG. 10A

FIG. 10B

FIG. 10C

FIG. 11A

P ↓ 65

1

80

69B

67

84

60

69

FIG. 11B

69B

69

FIG. 12

64

65

66

1

80

67

60

69